# EUROPÄISCHE PATENTSCHRIFT

(11) **EP 0 560 217 B1**
(45) Veröffentlichungstag und Bekanntmachung des Hinweises auf die Patenterteilung: **18.06.1997**
(21) Anmeldenummer: 93103523.2
(22) Anmeldetag: 05.03.1993
(51) Int. Cl.: H04M 1/66, G10L 3/00, G10L 5/06

(54) **Verfahren und Vorrichtung zur Überprüfung und Erlangung einer Zugangsberechtigung**
Method and device for check and attainment of authorization for access
Méthode et dispositif pour l'inspection et l'acquisition de l'authorisation de l'accès

(30) Priorität: 12.03.1992 DE 4207837
(43) Veröffentlichungstag der Anmeldung: 15.09.1993
(73) Patentinhaber: Alcatel SEL Aktiengesellschaft, D-70435 Stuttgart (DE); ALCATEL N.V., NL-1077 XX Amsterdam (NL)
(72) Erfinder: Kopp, Dieter, W-7254 Hemmingen (DE); Hörmann, Thomas, W-7141 Grossbottwar-Wzh. (DE); Dvorak, Susanne, W-7144 Asperg (DE); Ackermann, Uwe, W-7149 Freiberg a.N. (DE)
(74) Vertreter: Knecht, Ulrich Karl, Dipl.-Ing.

(56) Entgegenhaltungen:
- EP-A- 0 397 399
- DE-A- 3 314 570
- US-A- 4 481 384

## Beschreibung

Die Erfindung betrifft ein Verfahren und eine Vorrichtung zur Überprüfung und Erlangung einer Zugangsberechtigung.

Eine Möglichkeit zur Überprüfung und Erlangung einer Zugangsberechtigung zu Einrichtungen , so z.B. zu Sprachspeichersystemen, liegt darin, eine Ziffernfolge mittels Mehrfrequenz-Codewahl (MFV-Codewahl) einzugeben. (Bergland et al; "New Custom Calling Services"; Proceedings of the ISS; Paris, 7 - 11 May 1979; pages 1256 to 1262.) Viele Telefonapparate verwenden aber nicht den MFV-Code zur Signalisierung. Deshalb muß auf Zusatzgeräte zurückgegriffen werden, die in der Handhabung aber umständlich sind und zu Fehlfunktionen führen können. Zugangswort eine Spracherkennung oder Sprecheridentifizierung Eine weitere Möglichkeit liegt darin, daß mittels Abfrage eines Zugangsworts eine Spracherkennung oder Sprecheridentifizierung vorgenommen wird (Funkschau Fernsprechtechnik 15/1986; "Gehorcht aufs Wort"; Seite 48 bis 50). Diese Möglichkeit ist aber zu unsicher, da die Fehlerrate zwischen 20 und 30 % liegt. Außerdem ist diese Möglichkeit nur sehr aufwendig zu realisieren, da die Sprachverarbeitung in Echtzeit erfolgt, und weil entsprechend große Speicherkapazität zur Verfügung gestellt werden muß.

Aus der US-A-4 481 384 ist es außerdem bekannt, diese beiden Möglichkeiten zu Kombinieren.

Der Erfindung liegt die Aufgabe zugrunde, ein Verfahren und eine Vorrichtung zu entwickeln, welche mit möglichst einfachen Mitteln eine sichere und einfache Überprüfung und Erlangung einer Zugangsberechtigung ermöglichen.

Die Aufgabe wird verfahrensgemäß gelöst durch die Lehre des ersten Patentanspruchs und vorrichtungsgemäß durch die Merkmale des fünften Patentanspruchs.

Ein Vorteil der Erfindung liegt darin, daß unter Verwendung einfacher Mittel und ohne Verwendung eines Zusatzgerätes, welches sich besonders bei der Verwendung mit modernen Telefonen als sehr umständlich und fehlerbehaftet erweist, mittels akustischer Eingabe ein Zugangscode generiert wird, welcher mit einem zuvor erzeugten persönlichen Zugangscode verglichen wird.

Ein weiterer Vorteil der Erfindung liegt darin, daß, im Verhältnis zur Fehlerrate bei der Überprüfung der Zugangsberechtigung mittels Spracherkennung oder Sprecheridentifizierung, die Sicherheit vor unbefugtem Benutzen erhöht wird, und daß die Realisierung mit einfacheren Mitteln als bei der Sprachverarbeitung möglich ist.

Vorteilhafte Weiterentwicklungen des Verfahrens der Erfindung sind den Unteransprüchen 2 bis 4 zu entnehmen.

Nach Unteranspruch 2 wird, zusätzlich zu dem in Anspruch 1 beschriebenen Verfahren, eine Spracherkennung oder Sprecheridentifizierung vorgenommen. Nachdem, entsprechend dem Verfahren aus Anspruch 1, ein Zugangscode erzeugt und mit einem zuvor erzeugten Code verglichen wurde, wird zusätzlich ein Paßwort abgefragt. Dieses Paßwort wird entweder zur Spracherkennung oder zur Sprecheridentifizierung herangezogen. Nur bei zusätzlicher Übereinstimmung des Paßwortes dieser Methode mit einem gespeicherten Wort wird einem Benutzer Zugang zu der Einrichtung gewährt. Das Verfahren nach Anspruch 2 gewährleistet eine noch höhere Sicherheit vor unbefugtem Benutzen als das Verfahren nach Anspruch 1.

Nach Unteranspruch 3 wird, ebenfalls wie in Unteranspruch 2 zusätzlich zu dem im Anspruch 1 beschriebenen Verfahren, ein Zugangsschlüssel in Form von Ziffern abgefragt. Der Zifferncode wird mittels Mehrfrequenz-Codewahl eingegeben, und dient ebenfalls zur Erhöhung der Sicherheit vor unbefugtem Benutzen.

Mit dem Verfahren nach Unteranspruch 4 stehen einem nichtzugangsberechtigten Benutzer noch begrenzte Bedien- und Ausführungsmittel zur Verfügung. Nach dem Vergleich des im Betrieb generierten Zugangscodes mit dem vor Inbetriebnahme generierten Zugangscode, wird bei Nichtübereinstimmung des Codes Zugang zu begrenzten Bedien- und Ausführungsmitteln gewährt. Mit diesen Bedien- und Ausführungsmitteln besteht die Möglichkeit einige, nicht in die Funktionsweise der Einrichtung eingreifende Mittel in Anspruch zu nehmen.

Ein Ausführungsbeispiel wird wie folgt anhand der Figuren erläutert. Folgende Figuren zeigen:
- Fig. 1: ein Blockschaltbild der erfindungsgemäßen Vorrichtung zur Überprüfung der Zugangsberechtigung,
- Fig. 2: Ablaufdiagramm zur Erläutertung des erfindungsgemäßen Verfahrens zur Überprüfung der Zugangsberechtigung.

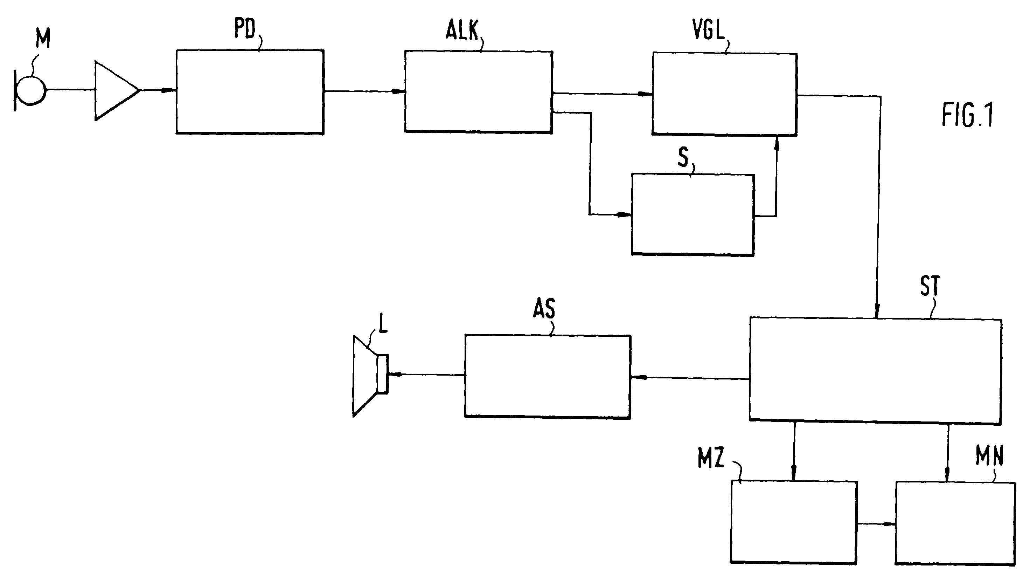

Eine erfindungsgemäße Vorrichtung zur Überprüfung der Zugangsberechtigung eines Benutzers von Einrichtungen enthält, wie in Fig. 1 gezeigt, als akustische Eingabemöglichkeit ein Mikrofon M, einen damit verbundenen Pegeldetektor PD und eine daran angeschlossene Auswertelogik ALK. Die Auswertelogik ALK ist direkt mit einem Vergleicher VGL, oder über einen Speicher S mit dem Vergleicher VGL verbunden. Diese ist wiederum mit einer Steuerung ST verbunden. Die Steuerung ST ist mit einem Ansagemodul AS mit nachfolgendem akustischen Ausgabemittel, einem Lautsprecher L, verbunden. Ebenso ist die Steuerung ST mit Mitteln für Nichtzugangsberechtigte MN und mit Mitteln für Zugangsberechtigte MZ verbunden, wobei von den Mitteln für Zugangsberechtigte MZ auf Mittel für Nichtzugangsberechtigte MN zugegriffen werden kann.

Ein akustisches Signal oder ein Schallpegel wird von dem Mikrofon M aufgenommen, verstärkt und auf den Pegeldetektor PD gegeben. In der darauffolgenden Auswertelogik ALK wird, z.B. mittels einer adaptiven Schwelle, festgestellt zu welchem Zeitpunkt ein Signal vorhanden ist.

Der Signalverlauf des so rekonstruierten Signals wird entweder zuerst in einem Speicher S gespeichert und danach auf einen Vergleicher VGL gegeben, oder es wird direkt auf den Vergleicher VGL gegeben. In dem Vergleicher VGL wird, z.B. durch Abtastung, das vor Inbetriebnahme generierte Signal mit dem im Betrieb generierten Signal auf Identität der Signalverläufe hin verglichen.

Das Ergebnis wird an die Steuerung ST weitergegeben. Im Fall der Übereinstimmung der Signalverläufe wird auf Mittel für Zugangsberechtigte MZ zugegriffen, und im Fall der Nichtübereinstimmung, oder im Fall des Nichtvorhandenseins eines Signals wird auf Mittel für Nichtzugangsberechtigte MN zurückgegriffen. Die Mittel für Nichtzugangsberechtigte MN bieten eine begrenzte Anzahl von Funktionen die auch für Nichtzugangsberechtigte nutzbar sein sollten. Auf diese begrenzte Anzahl an Funktionen kann auch über die Mittel für Zugangsberechtigte MZ zugegriffen werden.

Ein Ansagetext wird mittels der Steuerung ST auf ein Ansagemodul AS mit nachfolgendem Lautsprecher L gegeben und somit akustisch wahrnehmbar gemacht.

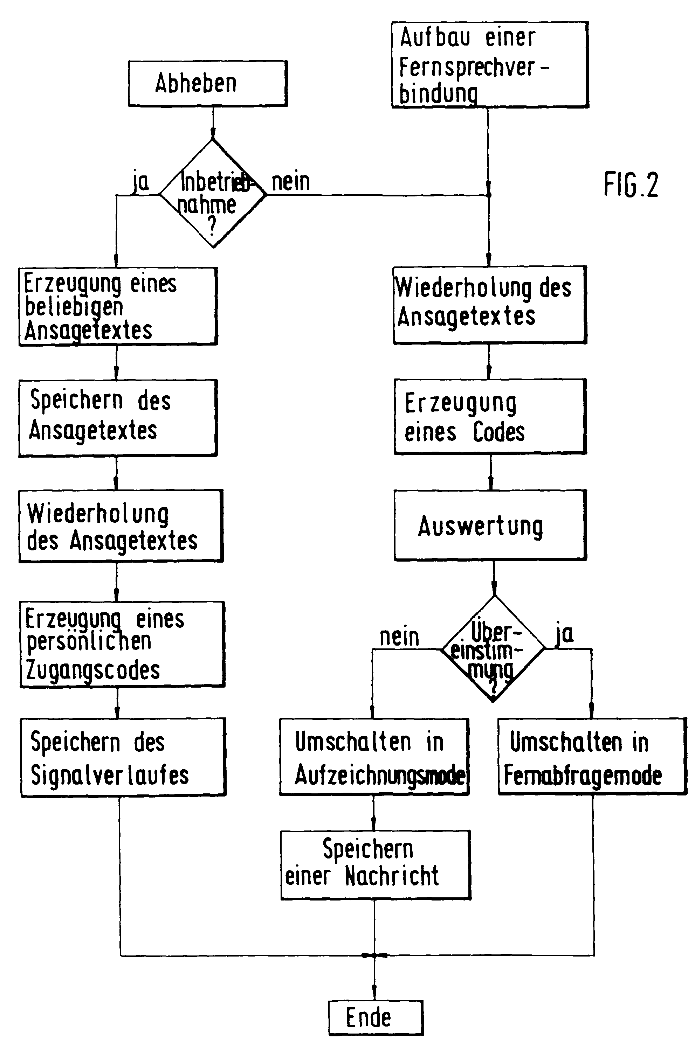

Im folgenden Teil wird das Verfahren zur Überprüfung einer Zugangsberechtigung anhand von Fig. 2 für den Anwendungsfall des Umschaltens in den Fernabfragemode bei einem Telekommunikationsendgerät, hier einem Telefonanrufbeantworter, erläutert.

Nach dem Abheben des Telefonhörers wird bei der Inbetriebnahme eines Telefonanrufbeantworters ein beliebiger Ansagetext erzeugt und gespeichert.

Zur Erzeugung des persönlichen Zugangscodes wird dieser Ansagetext wiederholt, und während der Wiederholung wird bei beliebig vielen, frei wählbaren Worten oder Worteilen ein akustisches Signal, z.B. in Form von Pfeifen oder beliebigen anderen Schallpegeln erzeugt. Diese akustischen Signale werden entsprechend der in Fig. 1 erläuterten Weise verarbeitet, und der Signalverlauf wird im Speicher abgelegt.

Im Betrieb wird, nach dem Aufbau einer Fernsprechverbindung zu dem Telefon mit angeschlossenem Telefonanrufbeantworter, der dort gespeicherte Ansagetext wiederholt. Parallel zu der Wiederholung des Ansagetextes wird ein Code durch Eingabe der gleichen akustischen Signale, oder durch Eingabe des gleichen Schallpegels erzeugt.

Es erfolgt eine Auswertung, bei der der soeben erzeugte Code mit dem bei Inbetriebnahme erzeugten Zugangscode verglichen wird. Im Fall der Übereinstimmung des Codes wird der Anrufbeantworter in den Fernabfragemode umgeschaltet. Im Fall der Nichtübereinstimmung, oder für den Fall des Nichtvorhandenseins eines erzeugten Zugangscodes wird der Anrufbeantworter in den Aufzeichnungsmode umgeschaltet. Ein Anrufer hat hier die Möglichkeit eine Nachricht zu hinterlassen, welche im Speicher abgelegt wird. Diese Nachricht ist, z.B. durch einen Zugangsberechtigten im Fernabfragemode, jederzeit abrufbar.

Der bei der Inbetriebnahme erzeugte Zugangscode kann jederzeit durch Löschen des alten Codes und Erzeugung eines neuen Codes ersetzt werden.

Anstelle der Verwendung der Vorrichtung für ein Telekommunikationsendgerät, kann die Vorrichtung für Datenverarbeitungsendgeräte oder für sonstige Anlagen verwendet werden.

Zur Erhöhung der Sicherheit vor unbefugter Benutzung kann zusätzlich ein Paßwort abgefragt werden. Dieses Paßwort wird zur Spracherkennung oder zur Sprecheridentifizierung herangezogen und wird mit einem gespeicherten Wort verglichen. Nur bei zusätzlicher Übereinstimmung der Worte wird einem Benutzer Zugang gewährt.

Eine andere Methode zur Erhöhung der Sicherheit vor unbefugter Benutzung ist eine zusätzliche Abfrage eines Zugangsschlüssels in Form von Ziffern. Der Zugangsschlüssel in Form von Ziffern kann beispielsweise mittels Mehrfrequenz-Codewahl eingegeben werden. Bei zusätzlicher Übereinstimmung des Zugangsschlüssels mit einer abgespeicherten Ziffernfolge wird einem Benutzer Zugang gewährt.

## Patentansprüche

1. Verfahren zur Überprüfung und Erlangung der Zugangsberechtigung zu Einrichtungen, die über akustische Ein- und Ausgabemittel verfügen, wobei vor der Inbetriebnahme ein Benutzer einen aus frei wählbaren Worten zusammengesetzten Ansagetext eingibt und aufzeichnet, und ein persönlicher Zugangscode generiert wird, indem der Benutzer bei der Wiedergabe des Ansagetextes bei mindestens einem Wort oder Wortteil ein akustisches Signal oder einen anderen Schallpegel abgibt, und im Betrieb, bei der Wiederholung des Ansagetextes, zur Erlangung der Zugangsberechtigung den entsprechenden Code auf die gleiche Weise generiert, und danach die Codes auf Übereinstimmung hin verglichen werden, und dann bei Übereinstimmung dem Benutzer Zugang erteilt wird.

2. Verfahren nach Anspruch 1, wobei zusätzlich, mittels Abfrage eines Paßwortes, eine Spracherkennung oder Sprecheridentifizierung vorgenommen wird.

3. Verfahren nach Anspruch 1, wobei zusätzlich ein Zugangsschlüssel in Form von Ziffern abgefragt wird.

4. Verfahren nach einem der Ansprüche 1 bis 3, wobei bei Nichtübereinstimmung der Codes einem Benutzer der Einrichtung begrenzte Bedien- und Ausführungsmittel zur Verfügung stehen.

5. Vorrichtung zur Durchführung des Verfahrens nach Anspruch 1, wobei ein Mikrofon (M) mit einem Pegeldetektor (PD) verbunden ist, welcher an eine Auswertelogik (ALK) angeschlossen ist, in welcher der Signalverlauf des persönlich generierten Zugangscodes ausgewertet wird, wobei die Auswertelogik (ALK) sowohl direkt, als auch über einen Speicher (S) mit einem Vergleicher (VGL) verbunden ist, und der Vergleicher (VGL) an eine Steuerung (ST) angeschlossen ist, welche über ein Ansagemodul (AS) mit einem nachfolgenden Lautsprecher (L) verbunden ist.

6. Vorrichtung nach Anspruch 5, wobei die Steuerung (ST) zusätzlich mit Mitteln für Nichtzugangsberechtigte (MN) sowie mit Mitteln für Zugangsberechtigte (MZ) verbunden ist.

7. Verwendung der Vorrichtung nach einem der Ansprüche 5 und 6, für ein Telekommunikationsendgerät.

8. Verwendung der Vorrichtung nach einem der Ansprüche 5 und 6, für ein Datenverarbeitungsendgerät.

9. Verwendung der Vorrichtung nach einem der Ansprüche 5 und 6, für eine Anlage.

## Claims

1. A method of checking and obtaining an authorization to access facilities having voice input and output means wherein prior to start-up, a user enters and records an announcement text composed of freely selectable words and, to generate a personal access code, produces an audible signal or another sound level during playback of the recorded announcement text during at least one word or word portion, wherein during operation, when the announcement text is repeated, the user generates the corresponding code in the same manner to obtain the access authorization, wherein the codes are then compared, and wherein,if the codes are identical, the user is permitted access.

2. A method as claimed in claim 1 wherein in addition, by asking the user to enter a password, voice recognition or speaker identification is performed.

3. A method as claimed in claim 1 wherein in addition, the user is asked to enter an access key in the form of digits.

4. A method as claimed in any one of claims 1 to 3 wherein, if the codes are not identical, limited operating and executing means are available to the user.

5. An apparatus for carrying out the method claimed in claim 1 wherein a microphone (M) is connected to a level detector (PD) which is coupled to an evaluation logic (ALK) which evaluates the signal waveform of the personal access code and is connected directly and through a memory (S) to a comparator (VGL) coupled to a controller (ST) which is connected through a recorded-announcement module (AS) to a loudspeaker (L).

6. An apparatus as claimed in claim 5 wherein the controller (ST) is also connected to means for users without access authorization (MN) and to means for users with access authorization (MZ).

7. Use of the apparatus claimed in claim 5 or 6 for a telecommunications terminal.

8. Use of the apparatus claimed in claim 5 or 6 for a data-processing terminal.

9. Use of the apparatus claimed in claim 5 or 6 for a system.

## Revendications

1. Procédé pour le contrôlé et l'obtention d'une autorisation d'accès pour des installations, qui possèdent des moyens d'entrées et de sorties acoustiques, dans lesquelles avant la mise en service un utilisateur entre un texte d'annonce fait de mots choisis librement et l'enregistre, et qui génère un code d'accès personnel, dans lequel l'utilisateur pendant la reproduction du texte de l'annonce fournit un signal acoustique ou un autre niveau sonore pour au moins un mot ou une partie de mot, et en service, quand le texte de l'annonce est répété, génère le code correspondant de la même manière en vue d'une comparaison des codes et en cas de concordance d'accorder l'accès à l'utilisateur.

2. Procédé, selon la revendication 1, pour lequel il est en plus, à l'aide d'un mot de passe, procédé à une reconnaissance vocale ou à une identification de l'interlocuteur.

3. Procédé, selon la revendication 1, pour lequel il est en plus demandé une clé d'accès sous forme de chiffres.

4. Procédé, selon les revendications 1 à 3, pour lequel la non-concordance du code de l'utilisateur de l'installation, permet une utilisation et une exécution limitées.

5. Dispositif d'exécution du procédé selon la revendication 1, dans. laquelle un microphone (M) est relié à un détecteur de niveau (DN), lequel est relié à une logique d'évaluation (LE), dans laquelle la forme du signal du code d'accès personnel généré est analysé, dans laquelle la logique d'évaluation (LE) est reliée directement ou par une unité de mémoire (UM) avec un comparateur (C), lequel comparateur (C) est relié à une commande (CMD) reliée à un haut parleur (HP) par l'intermédiaire d'un module d'annonce (MA).

6. Dispositif selon la revendication 5, dans laquelle la commande (CMD) est également reliée à des moyens d'accès pour personnes non-autorisées (MNA) ainsi qu'à des moyens d'accès pour personnes autorisées (MAA).

7. Utilisation du dispositif selon les revendications 5 et 6 pour un terminal de télécommunication.

8. Utilisation du dispositif selon les revendications 5 et 6 pour un terminal de traitement des données.

9. Utilisation du dispositif selon les revendications 5 et 6 pour une installation.
